# EUROPÄISCHE PATENTSCHRIFT

(11) **EP 1 209 162 B1**
(45) Veröffentlichungstag und Bekanntmachung des Hinweises auf die Patenterteilung: **28.12.2005**
(21) Anmeldenummer: 01124016.5
(22) Anmeldetag: 09.10.2001
(51) Int. Cl.: C07F 7/18, C07F 7/20

(54) **Verfahren zur Herstellung von Aminoalkylsilanen**
Process for preparing amino alkyl silanes
Procédé de préparation d'aminoalkylsilanes

(30) Priorität: 25.11.2000 DE 10058620
(43) Veröffentlichungstag der Anmeldung: 29.05.2002
(73) Patentinhaber: Degussa AG, 40474 Düsseldorf (DE)
(72) Erfinder: Kropfgans, Frank, Dr., 79618 Rheinfelden (DE); Rauleder, Hartwig, Dr., 79618 Rheinfelden (DE); Schwarz, Christoph, Dr., 45768 Marl (DE); Korte, Hermann-Josef, Dr., 45721 Haltern (DE)

(56) Entgegenhaltungen:
- DE-A- 19 513 976
- DE-A- 19 652 642
- US-A- 4 234 502

## Beschreibung

Die vorliegende Erfindung betrifft ein Verfahren zur Herstellung von Aminoalkylsilanen.

Bekannt ist ein Verfahren zur Herstellung von Aminoalkylsilanen, beispielsweise 3-Aminopropyltriethoxysilan (AMEO), wobei ein Chloralkylsilan, beispielsweise 3-Chlorpropyltriethoxysilan (CPTEO), mit einem Überschuss an Ammoniak oder einem organischen Amin in flüssiger Phase, beispielsweise mit Ammoniak bei T = 90 °C, p = 50 bar abs., Zeit = 6 h, batchweise umgesetzt wird. Nachfolgend wird abgedampft bzw. eingedampft und entspannt, wobei überschüssiger Ammoniak entweicht und Ammonchlorid kristallin anfällt. Der Abdampfprozess erfordert in der Regel einen Zeitaufwand von mehr als 10 Stunden. Die Abtrennung des Ammonchlorids vom Rohprodukt erfolgt üblicherweise durch Filtration. Das Rohprodukt wird nachfolgend destilliert (DE-OS 27 49 316, DE-OS 27 53 124).

Bei dem besagten Verfahren ist es von Nachteil, dass beim Entspannen der Produktmischung Anbackungen, die aus Ammonchloriden oder Aminhydrochloriden bestehen, an der Wand des Synthesereaktors sowie am Rührwerk auftreten und den Wärmeübergang im Hinblick auf den Abdampfprozess nachteilig beeinflussen. Die Ablagerungen und Anbackungen erfordern häufige Stillstandzeiten der Anlage, wobei der Synthesereaktor abgestellt, entleert, geöffnet, zum Lösen der Ammoniumsalzkrusten mit Wasser gefüllt, bzw. zusätzlich mechanisch von Anbackungen befreit, anschließend getrocknet und verschlossen werden muss.

Weiterhin ist aus EP 0 849 271 A2 (DE 196 52 642 A1) bekannt, 3-Aminopropyltrialkoxysilane durch kontinuierliche Fahrweise aus 3-Chlorpropyltrialkoxysilanen und Ammoniak herzustellen, indem man
a) γ-Chlorpropyltrialkoxysilan und Ammoniak zunächst im gewünschten Mengenverhältnis mischt,
b) dieses Gemisch auf die Reaktionstemperatur aufheizt,
c) mit einer für die vollständige Umsetzung ausreichenden Verweilzeit einen Druckreaktor durchlaufen lässt, wobei das Gemisch mehrer Temperaturzonen durchlaufen kann,
d) das Reaktionsgemisch anschließend abkühlt,
e) das Produkt aus einem zweiphasigen Gemisch abtrennt und
f) die ammoniakalische Phase in den Reaktor zurückführt.

Nachteilig hierbei ist jedoch, dass selbst bei einem 100-fachen Ammoniak-Überschuss bezüglich Chlorpropyltrialkoxysilan und einer zusätzlichen Nachreaktion bei 120°C nur maximal 95 % Ausbeute an Rohsilangemisch aus primären, sekundären und tertiären Aminosilanen erhalten werden.

Zur Produktseparation ist neben der Destillation und Abtrennung von ausgefallenem Ammoniumchlorid eine zusätzliche Druckextraktion erforderlich.

Somit ergab sich die Aufgabe, ein weiteres Verfahren zur Herstellung von Aminoalkylsilanen bereitzustellen. Ein besonderes Anliegen der vorliegenden Erfindung war es ein verbessertes Verfahren zur Herstellung von 3-Aminopropylalkoxysilanen bereitzustellen.

Die Aufgabe wird erfindungsgemäß entsprechend den Angaben der Ansprüche gelöst.

Überraschenderweise wurde gefunden, dass man in einfacher und wirtschaftlicher Weise Aminoalkylsilane herstellen kann, wenn man,
- in einer ersten Verfahrensstufe ein Halogenalkylsilan, zum Beispiel 3-Chlorpropyltriethoxysilan (CPTEO), mit überschüssigem Ammoniak oder einem im Überschuss eingesetzten organischen Amin in flüssiger Phase umsetzt,
- in einer zweiten Verfahrensstufe Ammoniak oder organisches Amin unter vermindertem Druck abdampft, wobei ein wesentlicher Teil von überschüssigem Ammoniak oder organischem Amin entweicht und Ammonchlorid oder Aminhydrochlorid zum überwiegenden Teil, geeigneterweise vollständig, in flüssiger Phase gelöst bleibt,
- das Produktgemisch aus der zweiten Verfahrensstufe in eine dritte Verfahrensstufe, die auf einem niedrigeren Druckniveau als die zweite Verfahrensstufe betrieben wird, überführt, Ammonchlorid oder Aminhydrochlorid auskristallisiert,
- nachfolgend kristallines Ammonchlorid oder Aminhydrochlorid vom Rohprodukt abtrennt und
- das Rohprodukt destillativ aufarbeitet.

Gegenstand der vorliegenden Erfindung ist somit ein Verfahren zur Herstellung von Aminoalkylsilanen der allgemeinen Formel I

R¹R²N - (CH₂)_{y} - Si(OR³)₃₋ₙR⁴ ₙ (I),

mit
- R¹ =: Arylrest oder Arylalkylrest oder Alkylrest mit 1 bis 4 C-Atomen oder H,
- R² =: Arylrest oder Arylalkylrest oder Alkylrest mit 1 bis 4 C-Atomen oder H,
- R³ =: Alkylrest mit 1 bis 8 C-Atomen oder Arylrest,
- R⁴ =: Alkylrest mit 1 bis 8 C-Atomen oder Arylrest,
- y =: 2 oder 3 oder 4 und
- n =: 0 oder 1 oder 2 oder 3,
durch Umsetzung eines Organosilans der allgemeinen Formel II

X - (CH₂)_{y} - Si(OR³)₃₋ₙR⁴ ₙ (II),

mit
- X =: Cl, Br, J oder F,
- R³ =: Alkylrest mit 1 bis 8 C-Atomen oder Arylrest,
- R⁴ =: Alkylrest mit 1 bis 8 C-Atomen oder Arylrest,
- y =: 2 oder 3 oder 4 und
- n =: 0 oder 1 oder 2 oder 3,
mit Ammoniak oder einer Stickstoffverbindung der allgemeinen Formel III

HNR¹R² (III),

mit
- R¹ =: Arylrest oder Arylalkylrest oder Alkylrest mit 1 bis 4 C-Atomen oder H,
- R² =: Arylrest oder Arylalkylrest oder Alkylrest mit 1 bis 4 C-Atomen oder H,
wobei
R¹ und R² gleich oder verschieden sein können,
indem man
- in einer ersten Verfahrensstufe ein Organosilan der allgemeinen Formel II mit überschüssigem Ammoniak oder organischem Amin der allgemeinen Formel III in flüssiger Phase umsetzt,
- in einer zweiten Verfahrensstufe Ammoniak oder organisches Amin unter vermindertem Druck abdampft und Ammonchlorid oder Aminhydrochlorid in flüssiger Phase gelöst bleibt,
- das Produktgemisch aus der zweiten Verfahrensstufe in eine dritte Verfahrensstufe, die auf einem niedrigeren Druckniveau als die zweite Verfahrensstufe betrieben wird, überführt, Ammonchlorid oder Aminhydrochlorid auskristallisiert,
- nachfolgend kristallines Ammonchlorid oder Aminhydrochlorid vom Rohprodukt abtrennt und
- das Rohprodukt destillativ aufarbeitet.

Als Organosilane der allgemeinen Formel II werden bei dem erfindungsgemäßen Verfahren bevorzugt 3-Chloralkylalkoxysilane eingesetzt, wie z. B. 3-Chlorpropyltriethoxysilan, 3-Chlorpropyltrimethoxysilan, 3-Chlorpropylmethyldimethoxysilan, 3-Chlorpropylmethyldiethoxysilan. Man kann aber auch andere Chloralkylalkoxysilane, wie z. B. 3-Chlorpropyldiethylmethoxysilan oder 3-Chlorpropylethylpropylethoxysilan, beim vorliegenden Verfahren einsetzen.

Als N-haltige Komponente gemäß der allgemeinen Formel III setzt man beim erfindungsgemäßen Verfahren vorzugsweise Ammoniak, Methylamin, Ethylamin oder Diethylamin ein.

Nach dem erfindungsgemäßen Verfahren können als Produkte in einfacher und besonders wirtschaftlicher Weise zum Beispiel 3-Aminopropyltriethoxysilan, 3-Aminopropyltrimethoxysilan, 3-Aminopropylmethyldiethoxysilan, N-Methyl-3-aminopropyltrimethoxysilan - um nur einige zu nennen - hergestellt werden.

Üblicherweise werden beim erfindungsgemäßen Verfahren dem Druckreaktor Organosilane der allgemeinen Formel II und Ammoniak oder organisches Amin der allgemeinen Formel III in flüssiger Form zugeführt, wobei geeigneterweise ein molares Verhältnis von Chloralkylalkoxysilan zu Ammoniak oder organischem Amin vom 1:10 bis 1:50 eingestellt wird. Die Umsetzung erfolgt in der ersten Verfahrensstufe in der Regel bei einem Druck von 25 bis < 100 bar abs. und einer Temperatur von 50 bis < 110 °C, wobei nahezu vollständiger Umsatz erfolgt. Darüber hinaus bleibt der nahezu vollständige Teil an Ammonchlorid oder Aminhydrochlorid in flüssiger Phase gelöst. Vorzugsweise verbleiben mehr als 99 %, besonders vorzugsweise 99,9 bis 100 % des bei der Umsetzung entstandenen Ammonchlorids oder Aminhydrochlorids in der Flüssigphase der ersten Stufe gelöst. Das so erhaltene Produktgemisch wird nachfolgend in die zweite Verfahrensstufe überführt, wobei die zweite Verfahrensstufe bei einem deutlich niedrigeren Druck als die erste Verfahrensstufe betrieben wird. Geeigneterweise werden dabei bereits nennenswerte Mengen an Ammoniak abgeflasht, beispielsweise 50 bis 80 Gew.-% des überschüssigen Ammoniaks oder organischen Amins bei einer Betriebsweise für den Übergang von 50 auf 15 bis 20 bar abs.

Die zweite Verfahrensstufe wird bevorzugt bei Drücken von > 10 bis < 50 bar abs., besonders vorzugsweise 11 bis 35 bar abs., ganz besonders vorzugsweise 13 bis 25 bar abs., insbesondere 15 bis 20 bar abs., und einer Temperatur von > 10 bis < 110 °C, besonders vorzugsweise 20 bis 95 °C, ganz besonders vorzugsweise 30 bis 85 °C, insbesondere 35 bis 80 °C, betrieben, sodass Ammonchlorid oder Aminhydrochlorid quasi vollständig in Flüssigphase gelöst bleiben und man dadurch Probleme aus dem Anfall von Feststoff in angestrebter Weise vermeiden kann. Im Allgemeinen ergeben sich dabei die Abdampfzeiten aus den Ammoniak- und Aminüberschussmengen der Reaktion und den zur Verfügung gestellten Abdampfeinrichtungen, Verdampferflächen etc. sowie der Konstruktion der verwendeten Anlage. Somit ergeben sich beim erfindungsgemäßen Verfahren durch die praktisch feststofffreie Fahrweise in der zweiten Verfahrensstufe große Freiheitsgrade zur Auswahl geeigneter und kostengünstiger Anlagenteile für besagte Abdampfprozesse. Die Produktverweilzeit in der zweiten Verfahrensstufe beträgt somit geeigneterweise 0,1 bis 4 Stunden, vorzugsweise 0,1 bis 2 Stunden, insbesondere 0,1 bis 1 Stunde.

Die dritte Verfahrensstufe (beispielsweise ein Kristallisator mit Rührwerk) betreibt man in der Regel bei einem Druck unterhalb des Enddrucks der zweiten Verfahrensstufe, vorzugsweise bei 1 bis 6 bar abs., wobei die Löslichkeit von Ammonchlorid oder Aminhydrochlorid im Produktgemisch unterschritten und dabei auf besonders schonende Weise in kristalliner Form anfällt. Die Betriebstemperatur der dritten Verfahrensstufe liegt in der Regel im Bereich von 20 bis 60 °C. Der Feststoff kann in an sich bekannter Weise vom Produkt abgetrennt und nachfolgend destillativ aufgearbeitet werden.

Im Allgemeinen führt man das erfindungsgemäße Verfahren wie folgt aus:

In einer ersten Verfahrensstufe wird ein Organosilan der allgemeinen Formel II mit überschüssigem Ammoniak oder organischem Amin in flüssiger Phase umgesetzt und das dabei entstehende Produktgemisch in die zweite Verfahrensstufe überführt, wo man Ammoniak oder organisches Amin unter vermindertem Druck abdampft und entstandenes Ammonchlorid oder Aminhydrochlorid in flüssiger Phase gelöst bleibt. Anschließend wird das Produktgemisch aus der zweiten Verfahrensstufe in eine dritte Verfahrensstufe, die auf einem niedrigeren Druckniveau als die zweite Verfahrensstufe betrieben wird, überführt. Hier wird Ammonchlorid oder Aminhydrochlorid auskristallisiert und vom Rohprodukt abgetrennt. Die Trennung kann beispielsweise durch Filtration erfolgen. Anschließend kann das so erhaltene Rohprodukt destillativ aufgearbeitet werden.

Das erfindungsgemäße Verfahren zeichnet sich insbesondere durch folgende Vorteile aus:
- Die Batchzeit im vorliegenden Verfahren kann im Gegensatz zu jener aus DE-PS 27 49 316 oder DE-OS 27 53 124 mindestens halbiert werden, wodurch die Anlagenkapazität verdoppelt werden konnte.
- Anbackungen in den Synthesereaktoren treten üblicherweise nicht mehr auf.
- In der zweiten Verfahrensstufe fällt nahezu kein Feststoff an, wodurch zum Verdampfen der Hauptmenge an Ammoniak oder organischem Amin an günstiger Stelle Energie in den Prozess eingetragen werden kann.
- Die Druckabstufung der erfindungsgemäßen Verfahrensstufen erlaubt für weite Prozessbereiche den Einsatz kostengünstigerer Apparate der Verfahrensstufen 2 bzw. 3 gegenüber der jeweils vorhergehenden Verfahrensstufe.
- Ebenso können aufgrund der reduzierten Ammoniakmengen bzw. der Mengen an organischem Amin jeweils gegenüber der Vorstufe kleinere Apparate eingesetzt werden.

Die Erfindung wird durch die nachfolgenden Beispiele näher erläutert:

### Beispiel 1

### Herstellung von 3-Aminopropyltriethoxysilan

In einem mit Rührwerk versehenen Autoklaven werden 7,5kg (31,1 mol) 3-Chlorpropyltriethoxysilan mit 24 kg (1 412 mol) Ammoniak bei 48 bis 50 bar und ca. 100°C innerhalb von 6 Stunden zur Reaktion gebracht. Nach dieser Zeit ist 3-Chlorpropyltriethoxysilan im gebildeten 3-Aminopropyltriethoxysilan-Rohprodukt mittels GC-Analyse nur noch in Spuren nachweisbar, das gebildete Ammoniumchlorid ist unter diesen Bedingungen im überschüssigen Ammoniak bzw. im gebildeten Aminosilan-Rohprodukt vollständig gelöst.

Anschließend wird der nicht abgekühlte und unter Druck stehende Inhalt des Autoklaven über ein Entspannungsventil in einen weiteren Druckbehälter überführt (Flash-Vorgang) und dabei gleichzeitig ein großer Teil des überschüssigen Ammoniaks unter Druck abdestilliert, indem der Druck in dieser Abdampfeinheit bei ca. 18 bis 20 bar geregelt wird.

Nach vollständiger Umlagerung des Reaktionssatzes aus dem Autoklaven in die erste Abdampfeinheit wird das Flash-Ventil geschlossen und der Autoklav stufenweise über wasser- bzw. - 40 °C-gekühlte Kondensatoren entspannt und danach erneut mit den Edukten befüllt und aufgeheizt.

Der Inhalt der ersten Abdampfeinheit wird über einen Umlaufverdampfer auf 50 bis 60 °C erwärmt und weiter Ammoniak bis zu einem Restdruck von ca. 15 bar abdestilliert. Nach ca. 1 Stunde sind ca. 70 % des überschüssigen Ammoniaks aus dem Aminosilan-Rohproduktgemisch entfernt, ohne dass gelöstes Ammoniumchlorid in fester Form aus dem Rohprodukt ausgefallen ist. Das verbliebene, ca. 60 °C heiße Aminosilan-Rohprodukt wird erneut ohne Abkühlung und unter Druck in die dritte Verfahrensstufe, den so genannten Kristallisator, überführt. Der Flash-Prozess wird analog zur ersten Verdampfereinheit durchgeführt. Im Kristallisator wird der Restdruck beim Flash-Prozess auf 3 bis 5 bar geregelt. Der Flash-Vorgang im Kristallisator erfolgt unter gleichzeitigem Rühren und Erwärmen der im Behälter gebildeten Aminosilan-Rohprodukt/Salzmaische.

Die entleerte erste Abdampfeinheit wird im Gegensatz zu dem Autoklaven nicht weiter entspannt, sondern mit dem Restdruck von ca. 12 bis 15 bar erneut befüllt.

Nachdem das gesamte Aminosilan-Rohprodukt in den Kristallisator überführt wurde, wird der verbliebene Ammoniak unter ständigem Rühren und Erwärmen abdestilliert, indem der Kristallisator-Innendruck stufenweise auf ca. 1 bar bei 20 °C Innentemperatur abgesenkt wird. Bei diesem Vorgang fällt restliches Ammoniumchlorid in kristalliner Form aus dem Aminosilan-Rohprodukt aus und wird durch den Rührvorgang in Suspension gehalten. Die Druckentspannung des Kristallisators ist nach ca. 3 bis 4 Stunden abgeschlossen. Die Rohproduktmaische wird anschließend in einen Vorratsbehälter abgelassen und restliches Ammoniak in das Abgassystem entspannt. Der Inhalt des Vorratsbehälters wird in einem Filtertrockner überführt, das Aminosilan-Rohprodukt vom Ammoniumchlorid abgetrennt, der Filterkuchen in üblicher Weise mit einem Waschfluid (z. B. Toluol, Benzin, Hexan etc.) gewaschen und die Filtrate mittels Vakuum-Destillation in die Einzelkomponenten aufgetrennt.

Nach Abschluss der Destillation erhält man 6,05 bis 6,4 kg 3-Aminopropyltriethoxysilan in einer gaschromatographisch bestimmten Reinheit von ca. 98,5 bis 99,0 GC-WLDFL-% und einem Chloridgehalt von 20 bis 50 ppm.

Die Ausbeute an 3-Aminopropyltriethoxysilan (nach Destillation) beträgt ca. 88 bis 92 %. Die während der Druck- bzw. Vakuumdestillation zurückgewonnenen Mengen an flüssigem Ammoniak bzw. Waschfluid werden erneut zur Herstellung von 3-Aminopropyltriethoxysilan eingesetzt.

### Beispiel 2

### Herstellung von 3-Aminopropyltrimethoxysilan

Analog zu Beispiel 1 werden 6,2 kg (31,1 mol) 3-Chlorpropyltrimethoxysilan mit 24 kg (1 412 mol) Ammoniak bei 48 bis 50 bar und ca. 100 °C innerhalb von 6 Stunden zur Reaktion gebracht und anschließend überschüssiges Ammoniak gemäß Beispiel 1 durch zwei Flash-Prozesse und Druckdestillation entfernt. Nach Filtration und destillativer Reinigung unter Vakuum erhält man 4,8 bis 5,1 kg 3-Aminopropyltrimethoxysilan in einer gaschromatographischen Reinheit von ca. 98,4 bis 99,0 WLDFL-% und einem Chloridgehalt von 20 bis 65 ppm. Die Ausbeute beträgt nach Destillation 86 bis 91 %.

### Beispiel 3

### Herstellung von 3-Aminopropylmethyldiethoxysilan

Gemäß Beispiel 1 werden 6,6 kg (31,1 mol) 3-Chlorpropylmethyldiethoxysilan mit 24 kg (1 412 mol) Ammoniak umgesetzt, überschüssiges - Ammoniak durch Druckdestillation und Flash-Prozesse entfernt und gebildetes 3-Aminopropylmethyldiethoxysilan durch Filtration und Vakuumdestillation isoliert.

Man erhält 5,4 bis 5,5 kg 3-Aminopropylmethyldiethoxysilan (Ausbeute: 90 bis 93 %) in einer gaschromatographisch bestimmten Reinheit von 98,7 bis 99,3 GC-WLDFL-% und einem Chloridgehalt von 16 bis 45 ppm.

## Patentansprüche

1. Verfahren zur Herstellung von Aminoalkylsilanen der allgemeinen Formel I
R¹R²N - (CH₂)_{y} - Si(OR³)₃₋ₙR⁴ ₙ (I),
mit
R¹ = Arylrest oder Arylalkylrest oder Alkylrest mit 1 bis 4 C-Atomen oder H,
R² = Arylrest oder Arylalkylrest oder Alkylrest mit 1 bis 4 C-Atomen oder H,
R³ = Alkylrest mit 1 bis 8 C-Atomen oder Arylrest,
R⁴ = Alkylrest mit 1 bis 8 C-Atomen oder Arylrest,
y = 2 oder 3 oder 4 und
n = 0 oder 1 oder 2 oder 3,
durch Umsetzung eines Organosilans der allgemeinen Formel II
X - (CH₂)_{y} - Si(OR³)₃₋ₙR⁴ ₙ (II),
mit
X = Cl, Br, J oder F,
R³ = Alkylrest mit 1 bis 8 C-Atomen oder Arylrest,
R⁴ = Alkylrest mit 1 bis 8 C-Atomen oder Arylrest,
y = 2 oder 3 oder 4 und
n = 0 oder 1 oder 2 oder 3,
mit Ammoniak oder einer Stickstoffverbindung der allgemeinen Formel III
HNR¹R² (III),
mit
R¹ = Arylrest oder Arylalkylrest oder Alkylrest mit 1 bis 4 C-Atomen oder H,
R² = Arylrest oder Arylalkylrest oder Alkylrest mit 1 bis 4 C-Atomen oder H,
wobei
R¹ und R²gleich oder verschieden sein können,
indem man
- in einer ersten Verfahrensstufe ein Organosilan der allgemeinen Formel II mit überschüssigem Ammoniak oder organischem Amin der allgemeinen Formel III in flüssiger Phase umsetzt,
- in einer zweiten Verfahrensstufe Ammoniak oder organisches Amin unter vermindertem Druck abdampft und Ammonchlorid oder Aminhydrochlorid in flüssiger Phase gelöst bleibt,
- das Produktgemisch aus der zweiten Verfahrensstufe in eine dritte Verfahrensstufe, die auf einem niedrigeren Druckniveau als die zweite Verfahrensstufe betrieben wird, überführt, Ammonchlorid oder Aminhydrochlorid auskristallisiert,
- nachfolgend kristallines Ammonchlorid oder Aminhydrochlorid vom Rohprodukt abtrennt und
- das Rohprodukt destillativ aufarbeitet.

2. Verfahren nach Anspruch 1,
**dadurch gekennzeichnet,**
**dass** man die Umsetzung in der ersten Verfahrensstufe bei einem Druck von 25 bis < 100 bar abs. und einer Temperatur von 50 bis < 110 °C durchführt.

3. Verfahren nach Anspruch 1 oder 2,
**dadurch gekennzeichnet,**
**dass** man die zweite Verfahrensstufe bei einem Druck von > 10 bis < 50 bar abs. und einer Temperatur von 10 bis < 110 °C betreibt.

4. Verfahren nach mindestens einem der Ansprüche 1 bis 3,
**dadurch gekennzeichnet,**
**dass** man die mittlere Produktverweilzeit in der zweiten Verfahrensstufe auf 0,1 bis 4 Stunden einstellt.

5. Verfahren nach mindestens einem der Ansprüche 1 bis 4,
**dadurch gekennzeichnet,**
**dass** man die dritte Verfahrensstufe bei einem Druck unterhalb des Enddrucks der zweiten Verfahrensstufe betreibt.

6. Verfahren nach Anspruch 5,
**dadurch gekennzeichnet,**
**dass** man die dritte Verfahrensstufe bei einem Druck von 1 bis 6 bar abs. betreibt.

## Claims

1. A process for preparing an aminoalkylsilane of the general formula I
R¹R²N―(CH₂)_{y}―Si(OR³)₃₋ₙR⁴ ₙ (I),
where
R¹ = aryl or aralkyl or alkyl having 1 to 4 carbon atoms or H,
R² = aryl or aralkyl or alkyl having 1 to 4 carbon atoms or H,
R³ = alkyl having 1 to 8 carbon atoms or aryl,
R⁴ = alkyl having 1 to 8 carbon atoms or aryl,
y = 2 or 3 or 4, and
n = 0 or 1 or 2 or 3,
by reacting an organosilane of the general formula II
X―(CH₂)_{y}―Si(OR³)₃₋ₙR⁴ ₙ (II),
where
X = chlorine, bromine, iodine or fluorine,
R³ = alkyl having 1 to 8 carbon atoms or aryl,
R⁴ = alkyl having 1 to 8 carbon atoms or aryl,
y = 2 or 3 or 4, and
n = 0 or 1 or 2 or 3,
with ammonia or a nitrogen compound of the general formula III
HNR¹R² (III),
where
R¹ = aryl or aralkyl or alkyl having 1 to 4 carbon atoms or H
R² = aryl or aralkyl or alkyl having 1 to 4 carbon atoms or H
and
R¹ and R² may be the same or different,
comprising
- in a first stage, reacting an organosilane of the general formula II with excess ammonia or organic amine of the general formula III in the liquid phase,
- in a second stage, evaporating ammonia or organic amine off under reduced pressure to leave ammonium chloride or amine hydrochloride dissolved in the liquid phase,
- transferring the product mixture from the second stage into a third stage, which is operated at a lower pressure level than the second stage, and crystallizing out ammonium chloride or amine hydrochloride,
- then separating crystalline ammonium chloride or amine hydrochloride from the crude product, and
- working up the crude product by distillation.

2. A process according to claim 1, **characterized in that** the reaction in the first stage is carried out at a pressure in the range from 25 to < 100 bar absolute and at a temperature in the range from 50 to < 110°C.

3. A process according to claim 1, or 2, **characterized in that** the second stage is operated at a pressure in the range from > 10 to < 50 bar absolute and at a temperature in the range from 10 to < 110°C.

4. A process according to at least one of claims 1 to 3, **characterized in that** the average residence time for product in the second stage is set in the range from 0.1 to 4 hours.

5. A process according to at least one of claims 1 to 4, **characterized in that** the third stage is operated at a pressure below the final pressure of the second stage.

6. A process according to claim 5, **characterized in that** the third stage is operated at a pressure in the range from 1 to 6 bar absolute.

## Revendications

1. Procédé de préparation d'aminoalkylsilanes de formule générale I
R¹R²N - (CH₂)_{y} - Si(OR³)₃₋ₙR⁴ ₙ (I),
dans laquelle
R¹ = radical aryle ou radical arylalkyle ou radical alkyle portant 1 à 4 atomes de C ou H,
R2 = radical aryle ou radical arylalkyle ou radical alkyle portant 1 à 4 atomes de C ou H,
R³ = radical alkyle portant 1 à 8 atomes de C ou radical aryle
R⁴ = radical alkyle portant 1 à 8 atomes de C ou radical aryle
y = 2 ou 3 ou 4 et
n = 0 ou 1 ou 2 ou 3
par transformation d'un organosilane de formule générale II
X-(CH₂)_{y}- Si(OR³)₃₋ₙR⁴ ₙ (II),
dans laquelle
X = Cl, Br, J ou F,
R³ = radical alkyle portant 1 à 8 atomes de C ou radical aryle,
R⁴ = radical alkyle portant 1 à 8 atomes de C ou radical aryle,
y = 2 ou 3 ou 4 et
n = 0 ou 1 ou 2 ou 3,
avec de l'ammoniac ou un composé d'azote de formule générale III
HNR¹R² (III),
dans laquelle
R¹ = radical aryle ou radical arylalkyle ou radical alkyle portant 1 à 4 atomes de C ou H,
R² = radical aryle ou radical arylalkyle ou radical alkyle portant 1 à 4 atomes de C ou H,
R¹ et R² pouvant être identiques ou différents
- en transformant, dans une première étape de procédé, un organosilane de formule générale II avec de l'ammoniac en excédent ou une amine organique de formule générale III en phase liquide,
- en éliminant par évaporation, dans une deuxième étape de procédé, l'ammoniac ou l'amine organique à un niveau de pression réduit et en laissant le chlorure d'ammonium ou l'hydrochlorure d'amine dissous dans la phase liquide,
- en transférant le mélange de produits de la deuxième étape de procédé dans une troisième étape de procédé réalisée à une pression inférieure à celle de la deuxième étape de procédé, en recristallisant le chlorure d'ammonium ou l'hydrochlorure d'amine,
- en séparant ensuite le chlorure d'ammonium cristallin ou l'hydrochlorure d'amine du produit brut et
- en purifiant par distillation le produit brut.

2. Procédé selon la revendication 1,
**caractérisé en ce qu'**
on réalise la transformation, au cours de la première étape de procédé, à une pression de 25 à < 100 bars abs. et à une température de 50 à < 110°C.

3. Procédé selon la revendication 1 ou 2,
**caractérisé en ce qu'**
on réalise la deuxième étape de procédé à une pression de > 10 à < 50 bars abs. et à une température de 10 à < 110°C.

4. Procédé selon au moins l'une quelconque des revendications 1 à 3,
**caractérisé en ce qu'**
on ajuste le temps de séjour moyen du produit à 0,1 à 4 heures au cours de la deuxième étape de procédé.

5. Procédé selon au moins l'une quelconque des revendications 1 à 4,
**caractérisé en ce qu'**
on réalise la troisième étape de procédé à une pression inférieure à la pression finale de la deuxième étape de procédé.

6. Procédé selon la revendication 5,
**caractérisé en ce qu'**
on réalise la troisième étape de procédé à une pression de 1 à 6 bars abs.
